(19) Europäisches Patentamt
European Patent Office
Office européen des brevets

(11) **EP 4 044 457 A1**

(12) **EUROPEAN PATENT APPLICATION**
published in accordance with Art. 153(4) EPC

(43) Date of publication:
**17.08.2022 Bulletin 2022/33**

(21) Application number: **19953253.2**

(22) Date of filing: **18.11.2019**

(51) International Patent Classification (IPC):
***H04B 10/03*** *(2013.01)* ***H04B 10/27*** *(2013.01)*

(52) Cooperative Patent Classification (CPC):
**H04B 10/03;** H04B 10/27

(86) International application number:
**PCT/JP2019/045077**

(87) International publication number:
**WO 2021/100083 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **WAKABAYASHI, Nanako**
**Tokyo 100-8310 (JP)**
• **YOSHIMA, Satoshi**
**Tokyo 100-8310 (JP)**
• **ISHIDA, Kazuyuki**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **OPTICAL COMMUNICATION SYSTEM AND OPTICAL COMMUNICATION METHOD**

(57) An optical communication system (100) includes a plurality of optical transmitters (1-1, 1-2), a plurality of first optical couplers (3-1, 3-2) provided respectively corresponding to the plurality of optical transmitters (1-1, 1-2), a plurality of optical receivers (2-1, 2-2), and a plurality of second optical couplers (4-1, 4-2) provided respectively corresponding to the plurality of optical receivers (2-1, 2-2), in which each of the plurality of first optical couplers (3-1, 3-2) splits an optical signal transmitted by the corresponding optical transmitter (1-1, 1-2) and outputs the optical signal to each of the plurality of second optical couplers (4-1, 4-2), each of the plurality of second optical couplers (4-1, 4-2) merges a plurality of optical signals output from the plurality of first optical couplers (3-1, 3-2) and outputs the merged signal to the corresponding optical receiver (2-1, 2-2), and the plurality of optical transmitters (1-1, 1-2) alternately transmits the optical signals.

FIG.1

## Description

Field

The present invention relates to a redundant optical communication system and an optical communication method.

Background

There is a redundant optical communication system, or an optical communication system having redundancy, that includes an active system and a standby system and can continue operation even when an equipment failure occurs. For example, a system disclosed in Patent Literature 1 performs switching to a standby system using a switch when a failure occurs in an active system.

Citation List

Patent Literature

Patent Literature 1: Japanese Patent Application Laid-open No. H10-209964

Summary

Technical Problem

However, the above conventional technique uses the switch and thus has had a problem of increased failure rate and reduced reliability. In particular, high reliability is required in an environment where parts cannot be easily replaced such as in a satellite, so that it is desirable to reduce the failure rate.

The present invention has been made in view of the above, and an object thereof is to provide an optical communication system capable of implementing redundancy while reducing the failure rate.

Solution to Problem

In order to solve the above-described problems and achieve the object, an optical communication system according to the present invention includes: a plurality of optical transmitters; a plurality of first optical couplers provided respectively corresponding to the plurality of optical transmitters; a plurality of optical receivers; and a plurality of second optical couplers provided respectively corresponding to the plurality of optical receivers, wherein each of the plurality of first optical couplers splits an optical signal transmitted by a corresponding optical transmitter and outputs the optical signal to each of the plurality of second optical couplers, each of the plurality of second optical couplers merges a plurality of optical signals output from the plurality of first optical couplers and outputs a merged optical signal to the corresponding optical receiver, and the plurality of optical transmitters alternately transmit an optical signal.

Advantageous Effects of Invention

The optical communication system according to the present invention has an effect of being able to implement redundancy while reducing the failure rate.

Brief Description of Drawings

FIG. 1 is a diagram illustrating a configuration of an optical communication system according to a first embodiment of the present invention.
FIG. 2 is a diagram illustrating transmission signals of optical transmitters and received signals and output signals of optical receivers when the optical communication system illustrated in FIG. 1 is operated normally.
FIG. 3 is a diagram illustrating an example of a detailed functional configuration of the optical communication system illustrated in FIG. 1.
FIG. 4 is a diagram illustrating an example of a state in which a failure has occurred in the optical communication system illustrated in FIG. 1.
FIG. 5 is a diagram illustrating the transmission signals of the optical transmitters and the received signals and the output signals of the optical receivers in the optical communication system in the state illustrated in FIG. 4.
FIG. 6 is a diagram illustrating a configuration of an optical communication system according to a second embodiment of the present invention.
FIG. 7 is a diagram illustrating transmission signals of optical transmitters and received signals and output signals of optical receivers when the optical communication system illustrated in FIG. 6 is operated normally.
FIG. 8 is a diagram illustrating an example of a state in which a failure has occurred in the optical communication system illustrated in FIG. 6.
FIG. 9 is a diagram illustrating the transmission signals of the optical transmitters and the received signals and the output signals of the optical receivers in the optical communication system in the state illustrated in FIG. 8.
FIG. 10 is a diagram illustrating a configuration of an optical communication system according to a third embodiment of the present invention.
FIG. 11 is a diagram illustrating transmission signals of optical transmitters and received signals and output signals of optical receivers when the optical communication system illustrated in FIG. 10 is operated normally.
FIG. 12 is a diagram illustrating an example of a state in which a failure has occurred in the optical communication system illustrated in FIG. 10.

FIG. 13 is a diagram illustrating the transmission signals of the optical transmitters and the received signals and the output signals of the optical receivers in the optical communication system in the state illustrated in FIG. 12.

FIG. 14 is a diagram illustrating a configuration of an optical communication system according to a fourth embodiment of the present invention.

FIG. 15 is a diagram illustrating transmission signals of optical transmitters and received signals and output signals of optical receivers when the optical communication system illustrated in FIG. 14 is operated normally.

FIG. 16 is a diagram illustrating a first example of a state in which a failure has occurred in the optical communication system illustrated in FIG. 14.

FIG. 17 is a diagram illustrating the transmission signals of the optical transmitters and the received signals and the output signals of the optical receivers in the optical communication system in the state illustrated in FIG. 16.

FIG. 18 is a diagram illustrating a second example of the state in which a failure has occurred in the optical communication system illustrated in FIG. 14.

FIG. 19 is a diagram illustrating a first example of the transmission signals of the optical transmitters and the received signals and the output signals of the optical receivers in the optical communication system in the state illustrated in FIG. 18.

FIG. 20 is a diagram illustrating a second example of the transmission signals of the optical transmitters and the received signals and the output signals of the optical receivers in the optical communication system in the state illustrated in FIG. 18.

Description of Embodiments

An optical communication system and an optical communication method according to embodiments of the present invention will now be described in detail with reference to the drawings. Note that the present invention is not limited to the embodiments.

First Embodiment.

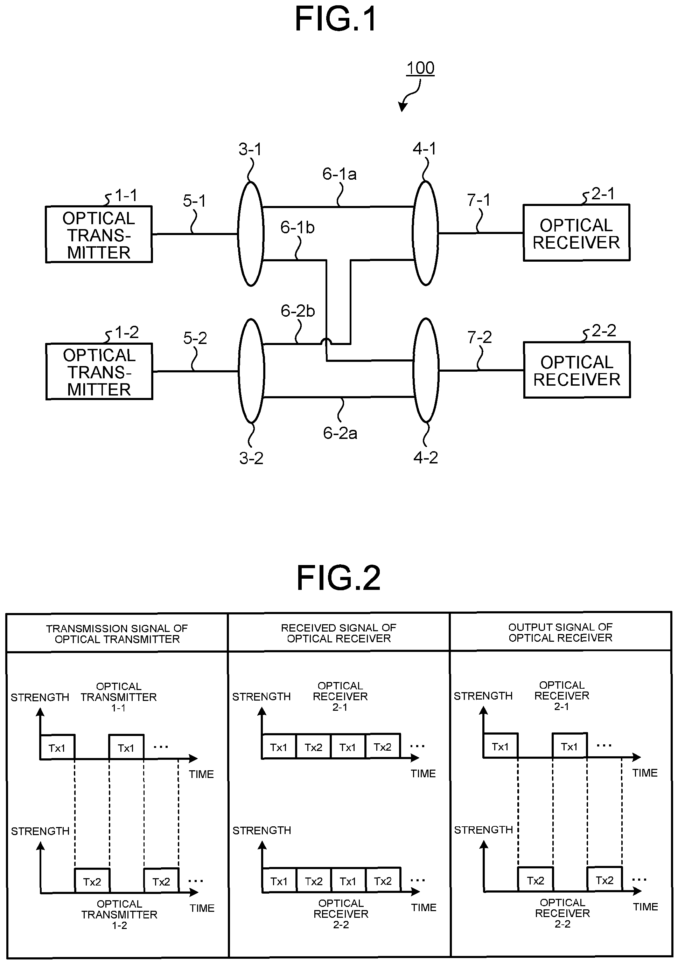

FIG. 1 is a diagram illustrating a configuration of an optical communication system 100 according to a first embodiment of the present invention. The optical communication system 100 is configured to have redundancy by using time division multiplexing (TDM). The optical communication system 100 includes a plurality of optical transmitters 1-1 and 1-2, a plurality of optical receivers 2-1 and 2-2, a plurality of first optical couplers 3-1 and 3-2 provided respectively corresponding to the plurality of optical transmitters 1-1 and 1-2, and a plurality of second optical couplers 4-1 and 4-2 provided respectively corresponding to the plurality of optical receivers 2-1 and 2-2. Specifically, the first optical coupler 3-1 is provided corresponding to the optical transmitter 1-1, and the first optical coupler 3-2 is provided corresponding to the optical transmitter 1-2. The second optical coupler 4-1 is provided corresponding to the optical receiver 2-1, and the second optical coupler 4-2 is provided corresponding to the optical receiver 2-2.

The optical transmitter 1-1 is connected to the first optical coupler 3-1 via an optical fiber 5-1. The optical transmitter 1-2 is connected to the first optical coupler 3-2 via an optical fiber 5-2. The first optical coupler 3-1 is connected to the second optical coupler 4-1 via an optical fiber 6-1a, and is connected to the second optical coupler 4-2 via an optical fiber 6-1b. The first optical coupler 3-2 is connected to the second optical coupler 4-1 via an optical fiber 6-2b, and is connected to the second optical coupler 4-2 via an optical fiber 6-2a. The second optical coupler 4-1 is connected to the optical receiver 2-1 via an optical fiber 7-1. The second optical coupler 4-2 is connected to the optical receiver 2-2 via an optical fiber 7-2.

The first optical coupler 3-1 splits an optical signal transmitted by the corresponding optical transmitter 1-1, and outputs the optical signal to each of the second optical couplers 4-1 and 4-2. The first optical coupler 3-2 splits an optical signal transmitted by the corresponding optical transmitter 1-2, and outputs the optical signal to each of the second optical couplers 4-1 and 4-2. Note that splitting of the optical signals performed by the first optical couplers 3-1 and 3-2 does not involve demultiplexing, and the content of the optical signals before and after splitting is the same.

The second optical coupler 4-1 merges the plurality of optical signals output from the first optical couplers 3-1 and 3-2 and outputs the merged signal to the corresponding optical receiver 2-1. The second optical coupler 4-2 merges the plurality of optical signals output from the first optical couplers 3-1 and 3-2 and outputs the merged signal to the corresponding optical receiver 2-2.

The optical receiver 2-1 receives the multiplexed optical signal from the second optical coupler 4-1. When each equipment in the optical communication system 100 is operated normally, the optical signal received by the optical receiver 2-1 includes the plurality of optical signals transmitted by the optical transmitters 1-1 and 1-2. The optical receiver 2-2 receives the merged optical signal from the second optical coupler 4-2. When each equipment in the optical communication system 100 is operated normally, the optical signal received by the optical receiver 2-2 includes the plurality of optical signals transmitted by the optical transmitters 1-1 and 1-2.

FIG. 2 is a diagram illustrating transmission signals of the optical transmitters 1-1 and 1-2 and received signals and output signals of the optical receivers 2-1 and 2-2 when the optical communication system 100 illustrated in FIG. 1 is operated normally. The optical transmitters 1-1 and 1-2 alternately transmit the optical signals such that each of the optical receivers 2-1 and 2-2 can receive the optical signals from the plurality of optical transmitters 1-1 and 1-2 in a time division manner.

When the optical transmitter 1-1 transmits an optical signal Tx1, the first optical coupler 3-1 splits the optical signal Tx1 and outputs the optical signal Tx1 to each of the second optical couplers 4-1 and 4-2. Subsequently, when the optical transmitter 1-2 transmits an optical signal Tx2, the first optical coupler 3-2 splits the optical signal Tx2 and outputs the optical signal Tx2 to each of the second optical couplers 4-1 and 4-2.

The second optical coupler 4-1 receives the optical signal Tx1 transmitted from the optical transmitter 1-1 via the optical fiber 5-1, the first optical coupler 3-1, and the optical fiber 6-1a, and the optical signal Tx2 transmitted from the optical transmitter 1-2 via the optical fiber 5-2, the first optical coupler 3-2, and the optical fiber 6-2b. The second optical coupler 4-1 merges the optical signal Tx1 and the optical signal Tx2, and outputs the merged optical signal to the optical receiver 2-1 via the optical fiber 7-1.

The second optical coupler 4-2 receives the optical signal Tx1 transmitted from the optical transmitter 1-1 via the optical fiber 5-1, the first optical coupler 3-1, and the optical fiber 6-1b, and the optical signal Tx2 transmitted from the optical transmitter 1-2 via the optical fiber 5-2, the first optical coupler 3-2, and the optical fiber 6-2a. The second optical coupler 4-2 merges the optical signal Tx1 and the optical signal Tx2, and outputs the merged optical signal to the optical receiver 2-2 via the optical fiber 7-2.

When the optical communication system 100 is operated normally, as illustrated in FIG. 2, the received signals of the optical receivers 2-1 and 2-2 alternately include the optical signal Tx1 and the optical signal Tx2. In other words, each of the optical receivers 2-1 and 2-2 receives the optical signal Tx1 and the optical signal Tx2 in a time division manner. Each of the optical receivers 2-1 and 2-2 may output the received signal as it is, or may select an output signal from the plurality of optical signals Tx1 and Tx2 included in the received signal and output the selected signal. A method by which each of the optical receivers 2-1 and 2-2 generates the output signal from the received signal is not particularly limited.

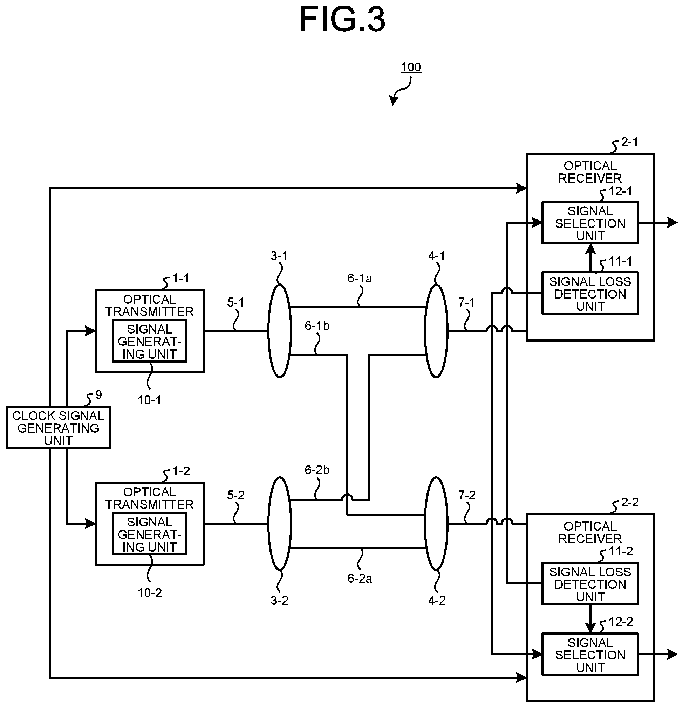

Here, an example of a functional configuration for the optical communication system 100 to generate the output signal from the received signal will be described. FIG. 3 is a diagram illustrating an example of a detailed functional configuration of the optical communication system 100 illustrated in FIG. 1. In addition to the configuration illustrated in FIG. 1, the optical communication system 100 includes a clock signal generating unit 9, a signal generating unit 10-1 provided in the optical transmitter 1-1, a signal generating unit 10-2 provided in the optical transmitter 1-2, a signal loss detection unit 11-1 and a signal selection unit 12-1 provided in the optical receiver 2-1, and a signal loss detection unit 11-2 and a signal selection unit 12-2 provided in the optical receiver 2-2.

The clock signal generating unit 9 has a function of generating a reference clock signal in the optical communication system 100 having redundancy. The clock signal generating unit 9 further outputs the generated reference clock signal to each of the optical transmitters 1-1 and 1-2 and the optical receivers 2-1 and 2-2.

The signal generating unit 10-1 determines a timing at which the optical transmitter 1-1 transmits a signal on the basis of the reference clock signal generated by the clock signal generating unit 9. Similarly, the signal generating unit 10-2 determines a timing at which the optical transmitter 1-2 transmits a signal on the basis of the reference clock signal generated by the clock signal generating unit 9. Specifically, the signal generating units 10-1 and 10-2 each determine the signal transmission timing such that the optical transmitters 1-1 and 1-2 alternately transmit the optical signals Tx1 and Tx2 as illustrated in FIG. 2.

Note that when Δt is a time interval between the signals, for example, the signal generating units 10-1 and 10-2 can sufficiently reduce Δt with respect to a signal period T. When L1 [m] is an optical fiber length from the optical transmitter 1-1 to the optical receiver 2-1, L2 [m] is an optical fiber length from the optical transmitter 1-2 to the optical receiver 2-2, c [m/s] is the speed of light in a vacuum, and "n" is a refractive index of a core of the optical fiber, the time interval Δt between the signals is expressed by the following expression (1).

$$\Delta t = (L2 - L1) / c \times n \ldots (1)$$

For example, when the signal period is T=1 ms, a difference between L2 and L1 is 0.3 m, the speed of light is $c=3.0\times10^8$, and the refractive index is n=1.5, the time interval is Δt=1.5 ns. Therefore, even when the transmission interval of the optical signals Tx1 and Tx2 is set to the time interval of Δt=1.5 ns that is sufficiently short with respect to the signal period of T=1 ms, the redundancy of the optical communication system 100 can be implemented.

The signal loss detection unit 11-1 has a function of detecting a loss of the received signal of the optical receiver 2-1. For example, the signal loss detection unit 11-1 may be a clock data recovery (CDR) circuit. The signal loss detection unit 11-1 outputs an alarm signal indicating a signal loss to the signal selection units 12-1 and 12-2 when detecting the signal loss in the received signal of the optical receiver 2-1, or does not output the alarm signal when not detecting the signal loss. For example, the signal loss detection unit 11-1 outputs the alarm signal in the case of a loss of the optical signal Tx1 from an optical communication path with high priority among a plurality of optical communication paths connected to the optical receiver 2-1, and need not output the alarm signal in the case of a loss of the optical signal Tx2 from an optical communication path with low priority. The signal loss detection unit 11-2 has a function of detecting a loss of the received signal of the optical receiver 2-2. The signal loss detection unit 11-2 may be a CDR circuit. The signal loss detection unit 11-2 outputs an alarm signal indicating a signal loss to the signal selection units 12-1 and 12-2 when detecting the signal loss in the received signal of the optical receiver 2-2, or does not output the alarm signal when not detecting the signal loss. For example, the signal loss detection unit 11-2 outputs the alarm signal in the case of a loss of the optical signal Tx2 from an optical communication path with high priority among a plurality of optical communication paths connected to the optical receiver 2-2, and need not output the alarm signal in the case of a loss of the optical signal Tx1 from an optical communication path with low priority.

The signal selection unit 12-1 has a function of selecting the output signal from the received signal of the optical receiver 2-1. The signal selection unit 12-1 can determine the presence or absence of the signal loss on the basis of the alarm signal, and select the output signal on the basis of the presence or absence of the signal loss. For example, the signal selection unit 12-1 can select the output signal using predetermined priority among the plurality of optical communication paths connected to the optical receiver 2-1. The signal selection unit 12-1 also selects the output signal on the basis of the reference clock signal. Specifically, the signal selection unit 12-1 determines a section including the output signal in the received signal on the basis of the reference clock signal.

Similarly, the signal selection unit 12-2 has a function of selecting the output signal from the received signal of the optical receiver 2-2. The signal selection unit 12-2 can determine the presence or absence of the signal loss on the basis of the alarm signal, and select the output signal on the basis of the presence or absence of the signal loss. For example, the signal selection unit 12-2 can select the output signal using predetermined priority among the plurality of optical communication paths connected to the optical receiver 2-2. The signal selection unit 12-2 also selects the output signal on the basis of the reference clock signal. Specifically, the signal selection unit 12-2 determines a section including the output signal in the received signal on the basis of the reference clock signal. The signal selection units 12-1 and 12-2 may be, for example, demultiplexers (DEMUX).

Specifically, the optical receiver 2-1 is connected to an optical communication path connected to the optical transmitter 1-1 and passing through the optical fiber 5-1, the first optical coupler 3-1, the optical fiber 6-1a, the second optical coupler 4-1, and the optical fiber 7-1, and an optical communication path connected to the optical transmitter 1-2 and passing through the optical fiber 5-2, the first optical coupler 3-2, the optical fiber 6-2b, the second optical coupler 4-1, and the optical fiber 7-1.

The priority of the optical communication path connecting the optical receiver 2-1 and the optical transmitter 1-1 is higher than the priority of the optical communication path connecting the optical receiver 2-1 and the optical transmitter 1-2. On the basis of the priority, the signal selection unit 12-1 of the optical receiver 2-1 can set the optical signal Tx1 received via the optical communication path with high priority as the output signal in normal times, that is, when the alarm signal is not received, and can set the optical signal Tx2 received via the optical communication path with low priority as the output signal when a failure occurs, that is, when the alarm signal is received.

Moreover, the optical receiver 2-2 is connected to an optical communication path connected to the optical transmitter 1-1 and passing through the optical fiber 5-1, the first optical coupler 3-1, the optical fiber 6-1b, the second optical coupler 4-2, and the optical fiber 7-2, and an optical communication path connected to the optical transmitter 1-2 and passing through the optical fiber 5-2, the first optical coupler 3-2, the optical fiber 6-2a, the second optical coupler 4-2, and the optical fiber 7-2.

The priority of the optical communication path connecting the optical receiver 2-2 and the optical transmitter 1-2 is higher than the priority of the optical communication path connecting the optical receiver 2-2 and the optical transmitter 1-1. On the basis of the priority, the signal selection unit 12-2 of the optical receiver 2-2 can set the optical signal Tx2 received via the optical communication path with high priority as the output signal in normal times, that is, when the alarm signal is not received, and can set the optical signal Tx1 received via the optical communication path with low priority as the output signal when a failure occurs, that is, when the alarm signal is received.

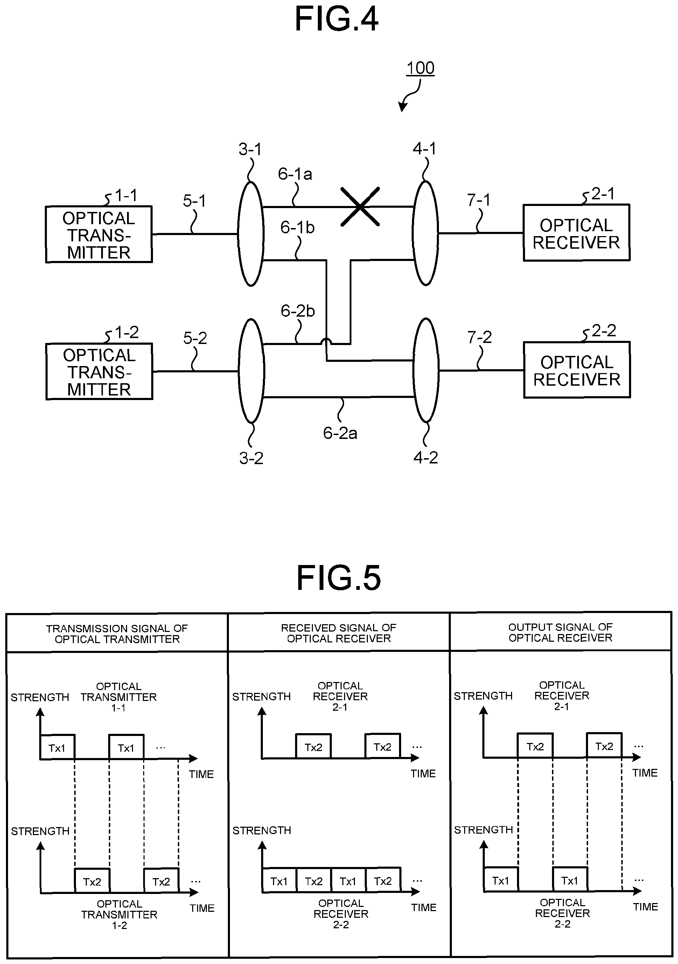

FIG. 4 is a diagram illustrating an example of a state in which a failure has occurred in the optical communication system 100 illustrated in FIG. 1. In FIG. 4, the optical fiber 6-1a of the optical communication system 100 is disconnected. The optical fiber 6-1a normally forms the communication path from the optical transmitter 1-1 to the optical receiver 2-1 together with the optical fiber 5-1, the first optical coupler 3-1, the second optical coupler 4-1, and the optical fiber 7-1. Therefore, when the optical fiber 6-1a is disconnected, the optical receiver 2-1 cannot receive the optical signal Tx1 from the optical transmitter 1-1.

FIG. 5 is a diagram illustrating the transmission signals of the optical transmitters 1-1 and 1-2 and the received signals and the output signals of the optical receivers 2-1 and 2-2 in the optical communication system 100 in the state illustrated in FIG. 4. As with the normal time illustrated in FIG. 2, the optical transmitters 1-1 and 1-2 alternately transmit the optical signals Tx1 and Tx2.

When the optical transmitter 1-1 transmits the optical signal Tx1, the first optical coupler 3-1 splits the optical signal Tx1 and outputs the optical signal Tx1 to each of the second optical couplers 4-1 and 4-2. Subsequently, when the optical transmitter 1-2 transmits the optical signal Tx2, the first optical coupler 3-2 splits the optical signal Tx2 and outputs the optical signal Tx2 to each of the second optical couplers 4-1 and 4-2.

The optical signal Tx1 transmitted by the optical transmitter 1-1 is split by the first optical coupler 3-1 and then output to the optical fibers 6-1a and 6-1b. Here, since the optical fiber 6-1a is disconnected, the optical signal Tx1 cannot reach the second optical coupler 4-1, the optical fiber 7-1, and the optical receiver 2-1. Meanwhile, the optical signal Tx1 output to the optical fiber 6-1b and the optical signal Tx2 output to the optical fiber 6-2a can reach the second optical coupler 4-2, and the optical signal Tx2 output to the optical fiber 6-2b can reach the second optical coupler 4-1.

The second optical coupler 4-1 receives the optical signal Tx2 transmitted from the optical transmitter 1-2 via the optical fiber 5-2, the first optical coupler 3-2, and the optical fiber 6-2b. The second optical coupler 4-1 outputs the optical signal Tx2 to the optical receiver 2-1 via the optical fiber 7-1.

The second optical coupler 4-2 receives the optical signal Tx1 transmitted from the optical transmitter 1-1 via the optical fiber 5-1, the first optical coupler 3-1, and the optical fiber 6-1b, and the optical signal Tx2 transmitted from the optical transmitter 1-2 via the optical fiber 5-2, the first optical coupler 3-2, and the optical fiber 6-2a. The second optical coupler 4-2 merges the optical signal Tx1 and the optical signal Tx2, and outputs the merged optical signal to the optical receiver 2-2 via the optical fiber 7-2.

When the optical communication system 100 is in the state illustrated in FIG. 4, the received signal of the optical receiver 2-1 includes the optical signal Tx2 and does not include the optical signal Tx1 as illustrated in FIG. 5. Moreover, the received signal of the optical receiver 2-2 alternately includes the optical signal Tx1 and the optical signal Tx2. In other words, the optical receiver 2-1 intermittently receives the optical signal Tx2, and the optical receiver 2-2 receives the optical signal Tx1 and the optical signal Tx2 in a time division manner. In this case, the signal selection unit 12-1 of the optical receiver 2-1 and the signal selection unit 12-2 of the optical receiver 2-2 receive the alarm signal from the signal loss detection unit 11-1, and do not receive the alarm signal from the signal loss detection unit 11-2. The signal selection unit 12-1 of the optical receiver 2-1 can set the optical signal Tx2 as the output signal on the basis of the alarm signal, and the signal selection unit 12-2 of the optical receiver 2-2 can set the optical signal Tx1 as the output signal on the basis of the alarm signal.

As described above, the optical communication system 100 according to the first embodiment of the present invention includes the plurality of optical transmitters 1-1 and 1-2, the plurality of first optical couplers 3-1 and 3-2 provided respectively corresponding to the plurality of optical transmitters 1-1 and 1-2, the plurality of optical receivers 2-1 and 2-2, and the plurality of second optical couplers 4-1 and 4-2 provided respectively corresponding to the plurality of optical receivers 2-1 and 2-2. The plurality of first optical couplers 3-1 and 3-2 each split the optical signal transmitted by a corresponding one of the optical transmitters 1-1 and 1-2, and output the optical signal to each of the plurality of second optical couplers 4-1 and 4-2. The plurality of second optical couplers 4-1 and 4-2 each merge the plurality of optical signals Tx1 and Tx2 output from the plurality of first optical couplers 3-1 and 3-2, and output the merged signal to a corresponding one of the optical receivers 2-1 and 2-2. The plurality of optical transmitters 1-1 and 1-2 alternately transmit the optical signals.

In the optical communication system 100, the optical transmitters 1-1 and 1-2 alternately transmit the optical signals, and each of the optical receivers 2-1 and 2-2 receives the optical signal Tx1 transmitted by the optical transmitter 1-1 and the optical signal Tx2 transmitted by the optical transmitter 1-2 in a time division manner. As a result, for example, even in a state where one or more of the optical fibers are disconnected to cause a failure in which one of the optical signals Tx1 and Tx2 cannot reach at least one of the optical receivers 2-1 and 2-2, the redundancy can be implemented without causing communication interruption. At this time, the optical communication system 100 does not use a switch for the redundancy, thereby being able to implement the redundancy while reducing a failure rate.

Second Embodiment.

In the first embodiment, the optical communication system 100 including the two optical transmitters 1-1 and 1-2 and the two optical receivers 2-1 and 2-2 has been described, whereas in a second embodiment, an optical communication system 200 including 2N optical transmitters 1-1 to 1-2N and 2N optical receivers 2-1 to 2-2N will be described.

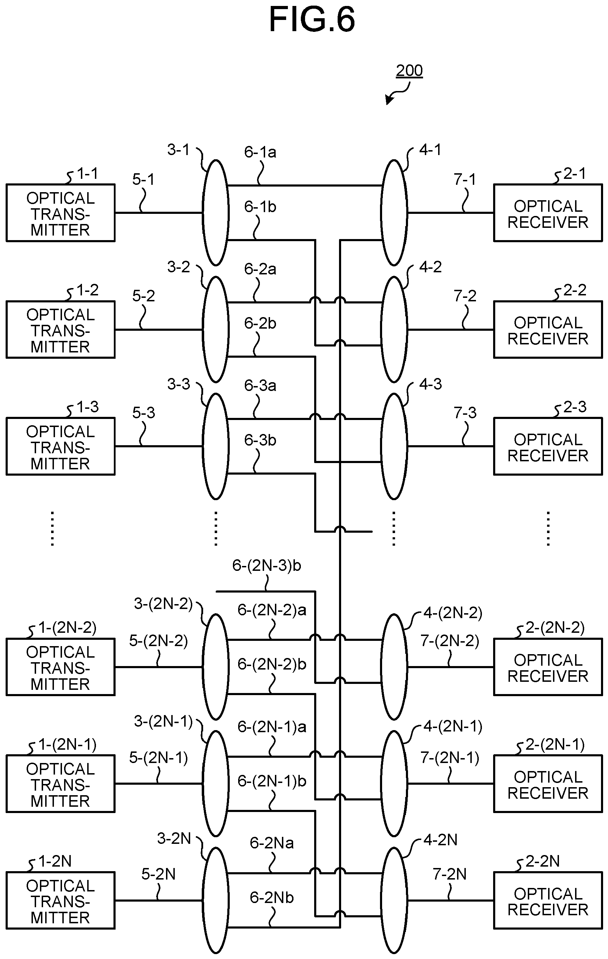

FIG. 6 is a diagram illustrating a configuration of the optical communication system 200 according to the second embodiment of the present invention. The optical communication system 200 includes the optical transmitters 1-1 to 1-2N, the optical receivers 2-1 to 2-N, 2N first optical couplers 3-1 to 3-2N provided respectively corresponding to the optical transmitters 1-1 to 1-2N, and 2N second optical couplers 4-1 to 4-2N provided respectively corresponding to the optical receivers 2-1 to 2-2N. Note that in the following description, an m-th optical transmitter is referred to as an optical transmitter 1-m, and an m-th optical receiver is referred to as an optical receiver 2-m. The first optical coupler corresponding to the optical transmitter 1-m is referred to as a first optical coupler 3-m, and the second optical coupler corresponding to the optical receiver 2-m is referred to as a second optical coupler 4-m. Also, among optical fibers 5-1 to 5-2N, the optical fiber connected to the optical transmitter 1-m is referred to as an optical fiber 5-m, and among optical fibers 7-1 to 7-2N, the optical fiber connected to the optical receiver 2-m is referred to as an optical fiber 7-m. The character "m" is an integer from 1 to 2N.

The optical transmitter 1-m is connected to the corresponding first optical coupler 3-m via the optical fiber 5-m. The first optical coupler 3-m is connected to the second optical coupler 4-m via an optical fiber 6-ma. When m=1 to 2N-1, the first optical coupler 3-m is connected to the second optical coupler 4-(m+1) via an optical fiber 6-mb, and when m=2N, the first optical coupler 3-m is connected to the second optical coupler 4-1 via an optical fiber 6-2Nb. The second optical coupler 4-m is connected to the corresponding optical receiver 2-m via the optical fiber 7-m.

The optical transmitter 1-m generates an optical signal Txm and outputs the optical signal Txm generated to the first optical coupler 3-m via the optical fiber 5-m. When m=1 to 2N-1, the first optical coupler 3-m splits the optical signal Txm output from the optical transmitter 1-m, outputs one of the split optical signals to the second optical coupler 4-m via the optical fiber 6-ma, and outputs another one of the split optical signals to the second optical coupler 4-(m+1) via the optical fiber 6-mb. When m=2N, the first optical coupler 3-2N splits an optical signal Tx2N output from the optical transmitter 1-2N, outputs one of the split optical signals to the second optical coupler 4-2N via an optical fiber 6-2Na, and outputs another one of the split optical signals to the second optical coupler 4-1 via the optical fiber 6-2Nb.

The second optical coupler 4-1 merges the optical signals Tx1 and Tx2N and outputs the merged signal to the optical receiver 2-1 via the optical fiber 7-1. When m=2 to 2N, the second optical coupler 4-m merges the optical signals Txm and Tx (m-1) and outputs the merged signal to the optical receiver 2-m via the optical fiber 7-m.

Note that although omitted here, as with the optical communication system 100 illustrated in FIG. 3, the optical communication system 200 includes the clock signal generating unit 9, the optical transmitters 1-1 to 1-2N include corresponding signal generating units 10-1 to 10-2N, and the optical receivers 2-1 to 2-2N include corresponding signal loss detection units 11-1 to 11-2N and signal selection units 12-1 to 12-2N. The clock signal generating unit 9 outputs a reference clock signal to each of the optical transmitters 1-1 to 1-2N and the optical receivers 2-1 to 2-2N.

When $\Delta t'$ is the time interval between the signals, for example, the signal generating units 10-1 to 10-2N can sufficiently reduce $\Delta t'$ with respect to the signal period T. When L1' [m] is an optical fiber length from the odd-numbered optical transmitter 1-1,..., or 1-(2N-1) to the optical receiver, L2' [m] is an optical fiber length from the even-numbered optical transmitter 1-2,..., or 1-2N to the optical receiver, c [m/s] is the speed of light in a vacuum, and "n" is the refractive index of the core of the optical fiber, the time interval $\Delta t'$ between the signals is expressed by the following expression (2).

$$\Delta t' = (L2' - L1') / c \times n \ldots (2)$$

The optical transmitters 1-1 to 1-2N are classified as a first group or a second group. For example, in the example illustrated in FIG. 6, the odd-numbered optical transmitters 1-1, 1-3,..., and 1-(2N-1) are classified as the first group, and the even-numbered optical transmitters 1-2,..., 1-(2N-2), and 1-2N are classified as the second group. The optical transmitters 1-1, 1-3,..., and 1-(2N-1) in the first group and the optical transmitters 1-2,..., 1-(2N-2), and 1-2N in the second group alternately transmit the optical signals.

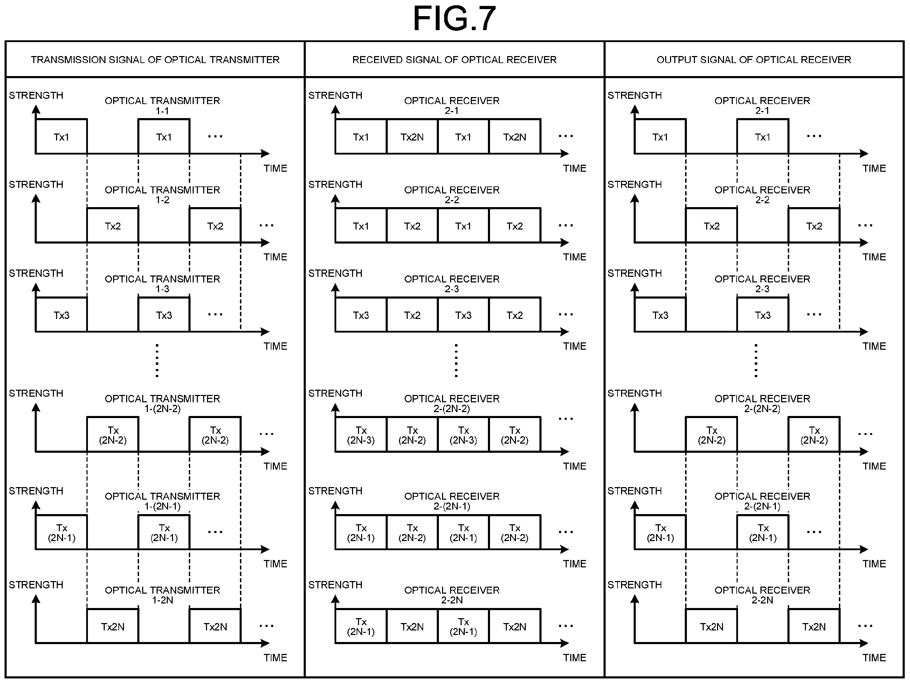

FIG. 7 is a diagram illustrating the transmission signals of the optical transmitters 1-1 to 1-2N and the received signals and the output signals of the optical receivers 2-1 to 2-2N when the optical communication system 200 illustrated in FIG. 6 is operated normally. The optical transmitters 1-1, 1-3,..., and 1-(2N-1) in the first group and the optical transmitters 1-2,..., 1-(2N-2), and 1-2N in the second group alternately transmit the optical signals.

The received signal of the optical receiver 2-1 includes the optical signals Tx1 and Tx2N. When m=2 to 2N, the received signal of the optical receiver 2-m includes the optical signals Txm and Tx (m-1). Each of the signal loss detection units 11-1 to 11-2N detects whether or not there is a signal loss in the received signal. Here, since no failure has occurred in the optical communication system 200, no signal loss is detected, so that the signal loss detection units 11-1 to 11-2N do not output the alarm signal.

The signal selection units 12-1 to 12-2N each select the output signal on the basis of the presence or absence of the alarm signal and the priority of the optical communication paths connected to a corresponding one of the optical receivers 2-1 to 2-2N. In FIG. 6, the optical communication paths including the optical fibers 6-1a to 6-2Na ending with "a" have a higher priority than the optical communication paths including the optical fibers 6-1b to 6-2Nb ending with "b". For example, of the two optical communication paths connected to the optical receiver 2-1, the optical communication path including the optical fiber 6-1a has a higher priority than the optical communication path including the optical fiber 6-2Nb. Similarly, of the two optical communication paths connected to the optical receiver 2-2, the optical communication path including the optical fiber 6-2a has a higher priority than the optical communication path including the optical fiber 6-1b. Therefore, each signal selection unit 12-m selects the optical signal Txm received via the optical communication path including the optical fiber 6-ma as the output signal. Moreover, the signal selection units 12-1 to 12-2N each select the output signal on the basis of the reference clock signal. Specifically, the signal selection units 12-1 to 12-2N each determine a section including the output signal in the received signal on the basis of the reference clock signal.

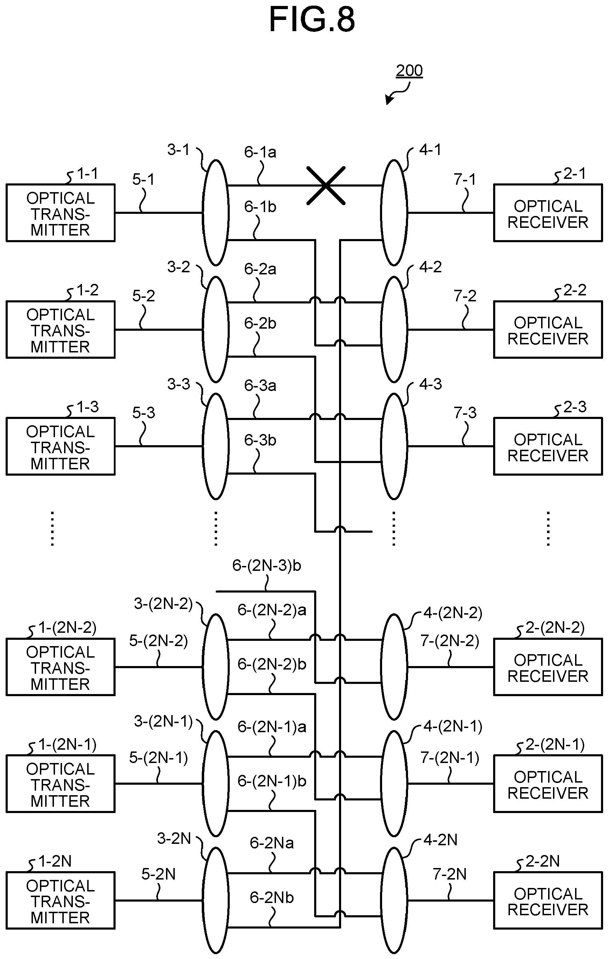

FIG. 8 is a diagram illustrating an example of a state in which a failure has occurred in the optical communication system 200 illustrated in FIG. 6. The optical fiber 6-1a in the optical communication system 200 is disconnected. The optical fiber 6-1a normally forms the communication path from the optical transmitter 1-1 to the optical receiver 2-1 together with the optical fiber 5-1, the first optical coupler 3-1, the second optical coupler 4-1, and the optical fiber 7-1. Therefore, when the optical fiber 6-1a is disconnected, the optical receiver 2-1 cannot receive the optical signal Tx1 from the optical transmitter 1-1.

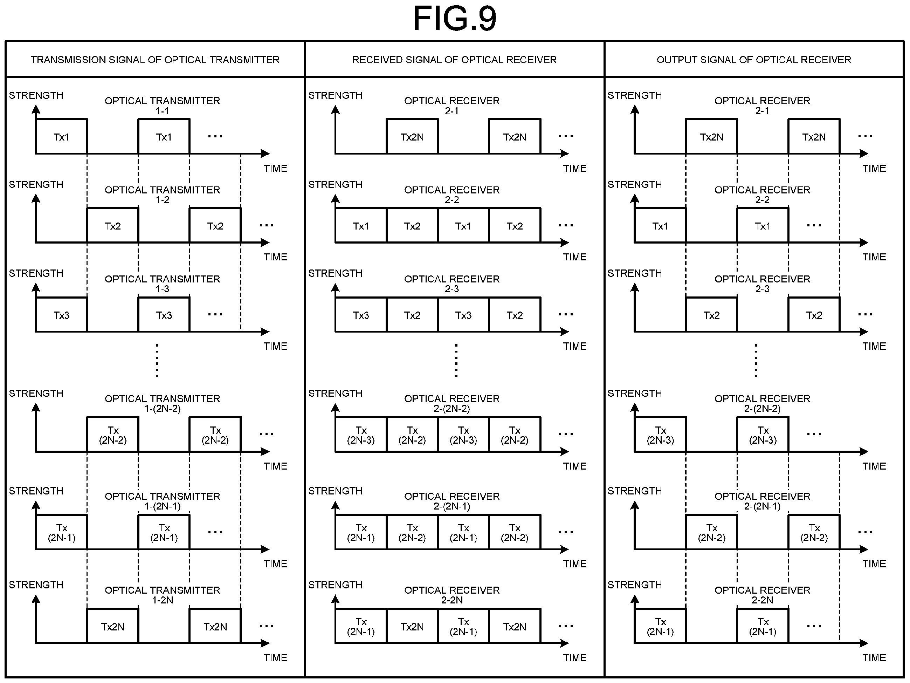

FIG. 9 is a diagram illustrating the transmission signals of the optical transmitters 1-1 to 1-2N and the received signals and the output signals of the optical receivers 2-1 to 2-2N in the optical communication system 200 in the state illustrated in FIG. 8. As with the normal time illustrated in FIG. 7, the optical transmitters 1-1, 1-3,..., and 1-(2N-1) in the first group and the optical transmitters 1-2,..., 1-(2N-2), and 1-2N in the second group alternately transmit the optical signals.

The received signal of the optical receiver 2-1 does not include the optical signal Tx1 but includes the optical signal Tx2N. When m=2 to 2N, as with the normal time illustrated in FIG. 7, the received signal of the optical receiver 2-m includes the optical signals Txm and Tx (m-1). Each of the signal loss detection units 11-1 to 11-2N detects whether or not there is a signal loss in the received signal. Here, since a failure has occurred in the optical fiber 6-1a, the signal loss detection unit 11-1 outputs the alarm signal to each of the signal selection units 12-1 to 12-2N.

The signal selection units 12-1 to 12-2N each select the output signal on the basis of the presence or absence of the alarm signal and the priority of the optical communication paths connected to a corresponding one of the optical receivers 2-1 to 2-2N. In the example of FIG. 9, the signal selection units 12-1 to 12-2N each receive the alarm signal, and thus perform an operation at the time of a failure. Specifically, the signal selection unit 12-1 sets, as the output signal, the optical signal Tx2N received via the optical communication path with low priority of the two optical communication paths connected to the optical receiver 2-1. When m=2 to 2N, each signal selection unit 12-m sets, as the output signal, the optical signal Tx (m-1) received via the optical communication path with low priority.

As described above, the optical communication system 200 according to the second embodiment of the present invention includes the plurality of optical transmitters 1-1 to 1-2N, the plurality of first optical couplers 3-1 to 3-2N provided respectively corresponding to the plurality of optical transmitters 1-1 to 1-2N, the plurality of optical receivers 2-1 to 2-2N, and the plurality of second optical couplers 4-1 to 4-2N provided respectively corresponding to the plurality of optical receivers 2-1 to 2-2N. The plurality of first optical couplers 3-m each split the optical signal transmitted by the corresponding optical transmitter 1-m, and output the optical signal to two of the plurality of second optical couplers 4-1 to 4-2N. The plurality of second optical couplers 4-1 to 4-2N each merge the plurality of optical signals output from two of the plurality of first optical couplers 3-1 to 3-2N, and output the merged signal to a corresponding one of the optical receivers 2-1 to 2-2N. The plurality of optical transmitters 1-1 to 1-2N are classified as the first group or the second group, and the optical transmitters 1-1, 1-3,..., and 1-(2N-1) in the first group and the optical transmitters 1-2,..., 1-(2N-2), and 1-2N in the second group alternately transmit the optical signals.

In the optical communication system 200, the optical transmitters 1-1, 1-3,..., and 1-(2N-1) in the first group and the optical transmitters 1-2,..., 1-(2N-2), and 1-2N in the second group alternately transmit the optical signals, and the optical receivers 2-1 to 2-2N each receive the two optical signals transmitted from two of the optical transmitters 1-1 to 1-2N in a time division manner. As a result, for example, even in a state where one or more of the optical fibers are disconnected to cause a failure in which one of the optical signal transmitted via the optical fibers 6-1a to 6-2Na and the optical signal transmitted via the optical fibers 6-1b to 6-2Nb cannot reach the optical receivers 2-1 to 2-2N, the redundancy can be implemented without causing communication interruption. At this time, the optical communication system 200 does not use a switch for the redundancy, thereby being able to implement the redundancy while reducing a failure rate.

Third Embodiment.

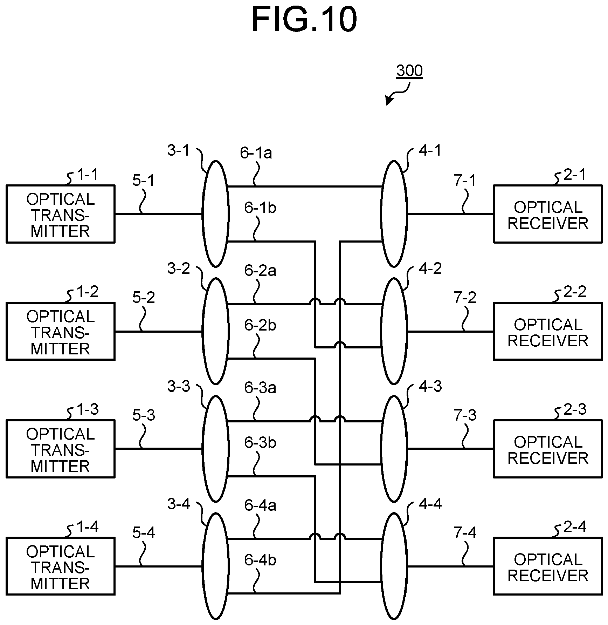

FIG. 10 is a diagram illustrating a configuration of an optical communication system 300 according to a third embodiment of the present invention. The optical communication system 300 is a specific example of a case where N=2 in the optical communication system 200. The optical communication system 300 includes four optical transmitters 1-1 to 1-4, four optical receivers 2-1 to 2-4, first optical couplers 3-1 to 3-4 provided respectively corresponding to the optical transmitters 1-1 to 1-4, and second optical couplers 4-1 to 4-4 provided respectively corresponding to the optical receivers 2-1 to 2-4.

The optical transmitter 1-1 is connected to the first optical coupler 3-1 via the optical fiber 5-1. The optical transmitter 1-2 is connected to the first optical coupler 3-2 via the optical fiber 5-2. The optical transmitter 1-3 is connected to the first optical coupler 3-3 via an optical fiber 5-3. The optical transmitter 1-4 is connected to the first optical coupler 3-4 via an optical fiber 5-4.

The first optical coupler 3-1 is connected to the second optical coupler 4-1 via the optical fiber 6-1a, and is connected to the second optical coupler 4-2 via the optical fiber 6-1b. The first optical coupler 3-2 is connected to the second optical coupler 4-2 via the optical fiber 6-2a, and is connected to the second optical coupler 4-3 via the optical fiber 6-2b. The first optical coupler 3-3 is connected to the second optical coupler 4-3 via an optical fiber 6-3a, and is connected to the second optical coupler 4-4 via an optical fiber 6-3b. The first optical coupler 3-4 is connected to the second optical coupler 4-4 via an optical fiber 6-4a, and is connected to the second optical coupler 4-1 via an optical fiber 6-4b.

The second optical coupler 4-1 is connected to the optical receiver 2-1 via the optical fiber 7-1. The second optical coupler 4-2 is connected to the optical receiver 2-2 via the optical fiber 7-2. The second optical coupler 4-3 is connected to the optical receiver 2-3 via an optical fiber 7-3. The second optical coupler 4-4 is connected to the optical receiver 2-4 via an optical fiber 7-4.

The optical transmitter 1-1 generates the optical signal Tx1 and outputs the optical signal Tx1 generated to the first optical coupler 3-1 via the optical fiber 5-1. The optical transmitter 1-2 generates the optical signal Tx2 and outputs the optical signal Tx2 generated to the first optical coupler 3-2 via the optical fiber 5-2. The optical transmitter 1-3 generates an optical signal Tx3 and outputs the optical signal Tx3 generated to the first optical coupler 3-3 via the optical fiber 5-3. The optical transmitter 1-4 generates an optical signal Tx4 and outputs the optical signal Tx4 generated to the first optical coupler 3-4 via the optical fiber 5-4.

The first optical coupler 3-1 splits the optical signal Tx1, outputs one of the split optical signals to the second optical coupler 4-1 via the optical fiber 6-1a, and outputs another one of the split optical signals to the second optical coupler 4-2 via the optical fiber 6-1b. The first optical coupler 3-2 splits the optical signal Tx2, outputs one of the split optical signals to the second optical coupler 4-2 via the optical fiber 6-2a, and outputs another one of the split optical signals to the second optical coupler 4-3 via the optical fiber 6-2b. The first optical coupler 3-3 splits the optical signal Tx3, outputs one of the split optical signals to the second optical coupler 4-3 via the optical fiber 6-3a, and outputs another one of the split optical signals to the second optical coupler 4-4 via the optical fiber 6-3b. The first optical coupler 3-4 splits the optical signal Tx4, outputs one of the split optical signals to the second optical coupler 4-4 via the optical fiber 6-4a, and outputs another one of the split optical signals to the second optical coupler 4-1 via the optical fiber 6-4b.

The second optical coupler 4-1 merges the optical signals Tx1 and Tx4 and outputs the merged signal to the optical receiver 2-1 via the optical fiber 7-1. The second optical coupler 4-2 merges the optical signals Tx2 and Tx1 and outputs the merged signal to the optical receiver 2-2 via the optical fiber 7-2. The second optical coupler 4-3 merges the optical signals Tx3 and Tx2 and outputs the merged signal to the optical receiver 2-3 via the optical fiber 7-3. The second optical coupler 4-4 merges the optical signals Tx4 and Tx3 and outputs the merged signal to the optical receiver 2-4 via the optical fiber 7-4.

Note that although omitted here, as with the optical communication system 100 illustrated in FIG. 3, the optical communication system 300 includes the clock signal generating unit 9, the optical transmitters 1-1 to 1-4 include corresponding signal generating units 10-1 to 10-4, and the optical receivers 2-1 to 2-4 include corresponding signal loss detection units 11-1 to 11-4 and signal selection units 12-1 to 12-4. The clock signal generating unit 9 outputs a reference clock signal to each of the optical transmitters 1-1 to 1-4 and the optical receivers 2-1 to 2-4.

The optical transmitters 1-1 to 1-4 are classified as a first group or a second group. Specifically, the odd-numbered optical transmitters 1-1 and 1-3 are classified as the first group, and the even-numbered optical transmitters 1-2 and 1-4 are classified as the second group. The optical transmitters 1-1 and 1-3 in the first group and the optical transmitters 1-2 and 1-4 in the second group alternately transmit the optical signals.

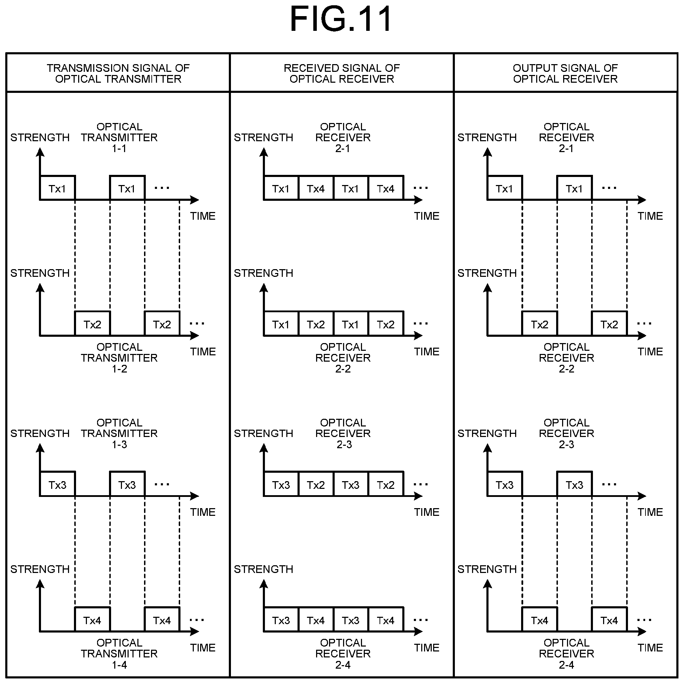

FIG. 11 is a diagram illustrating the transmission signals of the optical transmitters 1-1 to 1-4 and the received signals and the output signals of the optical receivers 2-1 to 2-4 when the optical communication system 300 illustrated in FIG. 10 is operated normally. The optical transmitters 1-1 and 1-3 in the first group and the optical transmitters 1-2 and 1-4 in the second group alternately transmit the optical signals.

The received signal of the optical receiver 2-1 includes the optical signals Tx1 and Tx4. The received signal of the optical receiver 2-2 includes the optical signals Tx2 and Tx1. The received signal of the optical receiver 2-3 includes the optical signals Tx3 and Tx2. The received signal of the optical receiver 2-4 includes the optical signals Tx4 and Tx3.

Each of the signal loss detection units 11-1 to 11-4 detects whether or not there is a signal loss in the received signal. Here, since no failure has occurred in the optical communication system 300, no signal loss is detected, so that the signal loss detection units 11-1 to 11-4 do not output the alarm signal.

The signal selection units 12-1 to 12-4 each select the output signal on the basis of the presence or absence of the alarm signal and the priority of the optical communication paths connected to a corresponding one of the optical receivers 2-1 to 2-4. In FIG. 10, the optical communication paths including the optical fibers 6-1a to 6-4a ending with "a" have a higher priority than the optical communication paths including the optical fibers 6-1b to 6-4b ending with "b". For example, of the two optical communication paths connected to the optical receiver 2-1, the optical communication path including the optical fiber 6-1a has a higher priority than the optical communication path including the optical fiber 6-4b. Similarly, of the two optical communication paths connected to the optical receiver 2-2, the optical communication path including the optical fiber 6-2a has a higher priority than the optical communication path including the optical fiber 6-1b. Of the two optical communication paths connected to the optical receiver 2-3, the optical communication path including the optical fiber 6-3a has a higher priority than the optical communication path including the optical fiber 6-2b. Of the two optical communication paths connected to the optical receiver 2-4, the optical communication path including the optical fiber 6-4a has a higher priority than the optical communication path including the optical fiber 6-3b.

Therefore, the signal selection unit 12-1 selects the optical signal Tx1 received via the optical communication path including the optical fiber 6-1a as the output signal. The signal selection unit 12-2 selects the optical signal Tx2 received via the optical communication path including the optical fiber 6-2a as the output signal. The signal selection unit 12-3 selects the optical signal Tx3 received via the optical communication path including the optical fiber 6-3a as the output signal. The signal selection unit 12-4 selects the optical signal Tx4 received via the optical communication path including the optical fiber 6-4a as the output signal. Moreover, the signal selection units 12-1 to 12-4 each select the output signal on the basis of the reference clock signal. Specifically, the signal selection units 12-1 to 12-4 each determine a section including the output signal in the received signal on the basis of the reference clock signal.

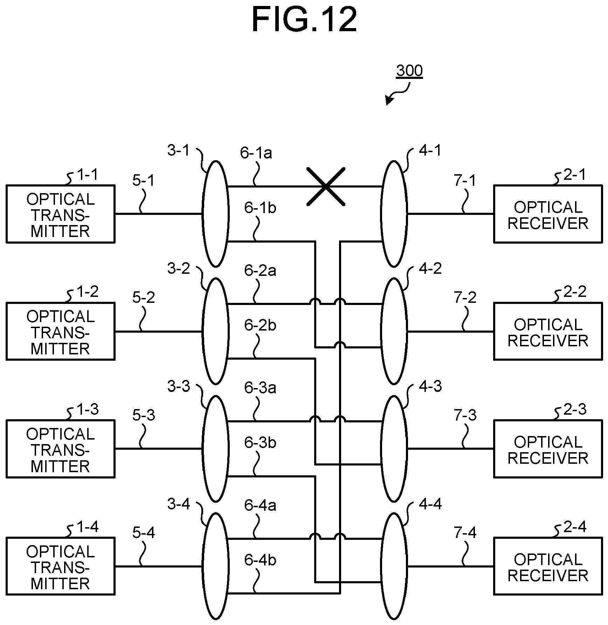

FIG. 12 is a diagram illustrating an example of a state in which a failure has occurred in the optical communication system 300 illustrated in FIG. 10. The optical fiber 6-1a in the optical communication system 300 is disconnected. The optical fiber 6-1a normally forms the communication path from the optical transmitter 1-1 to the optical receiver 2-1 together with the optical fiber 5-1, the first optical coupler 3-1, the second optical coupler 4-1, and the optical fiber 7-1. Therefore, when the optical fiber 6-1a is disconnected, the optical receiver 2-1 cannot receive the optical signal Tx1 from the optical transmitter 1-1.

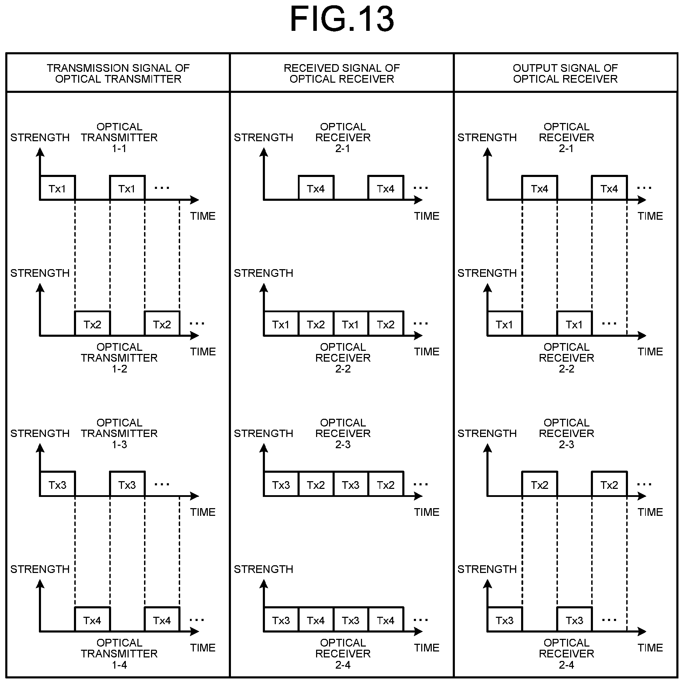

FIG. 13 is a diagram illustrating the transmission signals of the optical transmitters 1-1 to 1-4 and the received signals and the output signals of the optical receivers 2-1 to 2-4 in the optical communication system 300 in the state illustrated in FIG. 12. As with the normal time illustrated in FIG. 11, the optical transmitters 1-1 and 1-3 in the first group and the optical transmitters 1-2 and 1-4 in the second group alternately transmit the optical signals.

The received signal of the optical receiver 2-1 does not include the optical signal Tx1 but includes the optical signal Tx4. The received signal of the optical receiver 2-2 includes the optical signals Tx2 and Tx1. The received signal of the optical receiver 2-3 includes the optical signals Tx3 and Tx2. The received signal of the optical receiver 2-4 includes the optical signals Tx4 and Tx3.

Each of the signal loss detection units 11-1 to 11-4 detects whether or not there is a signal loss in the received signal. Here, since a failure has occurred in the optical fiber 6-1a, the signal loss detection unit 11-1 outputs the alarm signal to each of the signal selection units 12-1 to 12-4.

The signal selection units 12-1 to 12-4 each select the output signal on the basis of the presence or absence of the alarm signal and the priority of the optical communication paths connected to a corresponding one of the optical receivers 2-1 to 2-4. In the example of FIG. 13, the signal selection units 12-1 to 12-4 each receive the alarm signal, and thus perform an operation at the time of a failure. Specifically, the signal selection unit 12-1 sets, as the output signal, the optical signal Tx4 received via the optical communication path with low priority of the two optical communication paths connected to the optical receiver 2-1. The signal selection unit 12-2 sets, as the output signal, the optical signal Tx1 received via the optical communication path with low priority of the two optical communication paths connected to the optical receiver 2-2. The signal selection unit 12-3 sets, as the output signal, the optical signal Tx2 received via the optical communication path with low priority of the two optical communication paths connected to the optical receiver 2-3. The signal selection unit 12-4 sets, as the output signal, the optical signal Tx3 received via the optical communication path with low priority of the two optical communication paths connected to the optical receiver 2-4.

As described above, the optical communication system 300 according to the third embodiment of the present invention includes the plurality of optical transmitters 1-1 to 1-4, the plurality of first optical couplers 3-1 to 3-4 provided respectively corresponding to the plurality of optical transmitters 1-1 to 1-4, the plurality of optical receivers 2-1 to 2-4, and the plurality of second optical couplers 4-1 to 4-4 provided respectively corresponding to the plurality of optical receivers 2-1 to 2-4. The plurality of first optical couplers 3-1 to 3-4 each split the optical signal transmitted by a corresponding one of the optical transmitters 1-1 to 1-4, and output the optical signal to two of the plurality of second optical couplers 4-1 to 4-4. The plurality of second optical couplers 4-1 to 4-4 each merge the plurality of optical signals output from two of the plurality of first optical couplers 3-1 to 3-4, and output the merged signal to a corresponding one of the optical receivers 2-1 to 2-4. The plurality of optical transmitters 1-1 to 1-4 are classified as the first group or the second group, and the optical transmitters 1-1 and 1-3 in the first group and the optical transmitters 1-2 and 1-4 in the second group alternately transmit the optical signals.

In the optical communication system 300, the optical transmitters 1-1 and 1-3 in the first group and the optical transmitters 1-2 and 1-4 in the second group alternately transmit the optical signals, and the optical receivers 2-1 to 2-4 each receive the two optical signals transmitted from two of the optical transmitters 1-1 to 1-4 in a time division manner. As a result, for example, even in a state where one or more of the optical fibers are disconnected to cause a failure in which one of the optical signal transmitted via the optical fibers 6-1a to 6-4a and the optical signal transmitted via the optical fibers 6-1b to 6-4b cannot reach the optical receivers 2-1 to 2-4, the redundancy can be implemented without causing communication interruption. At this time, the optical communication system 300 does not use a switch for the redundancy, thereby being able to implement the redundancy while reducing a failure rate.

Fourth Embodiment.

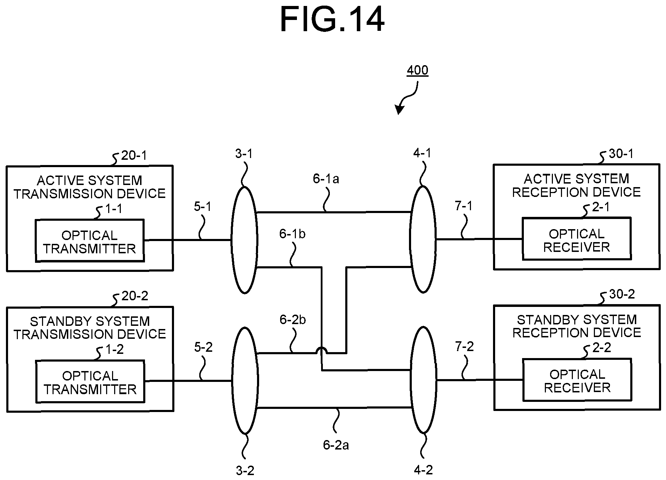

FIG. 14 is a diagram illustrating a configuration of an optical communication system 400 according to a fourth embodiment of the present invention. The optical communication system 400 includes an active system transmission device 20-1 including the optical transmitter 1-1, a standby system transmission device 20-2 including the optical transmitter 1-2, an active system reception device 30-1 including the optical receiver 2-1, and a standby system reception device 30-2 including the optical receiver 2-2. The optical communication system 400 further includes the first optical couplers 3-1 and 3-2 and the second optical couplers 4-1 and 4-2.

Since a connection relationship between the optical transmitters 1-1 and 1-2 and the optical receivers 2-1 and 2-2 is similar to the configuration described in the first embodiment, a detailed description thereof is omitted here.

The optical transmitter 1-1 included in the active system transmission device 20-1 and the optical transmitter 1-2 included in the standby system transmission device 20-2 alternately transmit optical signals. The optical transmitter 1-1 outputs the optical signal Tx1 to the first optical coupler 3-1 via the optical fiber 5-1. The optical transmitter 1-2 outputs the optical signal Tx2 to the first optical coupler 3-2 via the optical fiber 5-2.

The first optical coupler 3-1 splits the optical signal Tx1, outputs one of the split optical signals to the second optical coupler 4-1 via the optical fiber 6-1a, and outputs another one of the split optical signals to the second optical coupler 4-2 via the optical fiber 6-1b. The first optical coupler 3-2 splits the optical signal Tx2, outputs one of the split optical signals to the second optical coupler 4-2 via the optical fiber 6-2a, and outputs another one of the split optical signals to the second optical coupler 4-1 via the optical fiber 6-2b.

The second optical couplers 4-1 and 4-2 each merge the optical signals Tx1 and Tx2 and output the merged signal to a corresponding one of the optical receivers 2-1 and 2-2 via a corresponding one of the optical fibers 7-1 and 7-2.

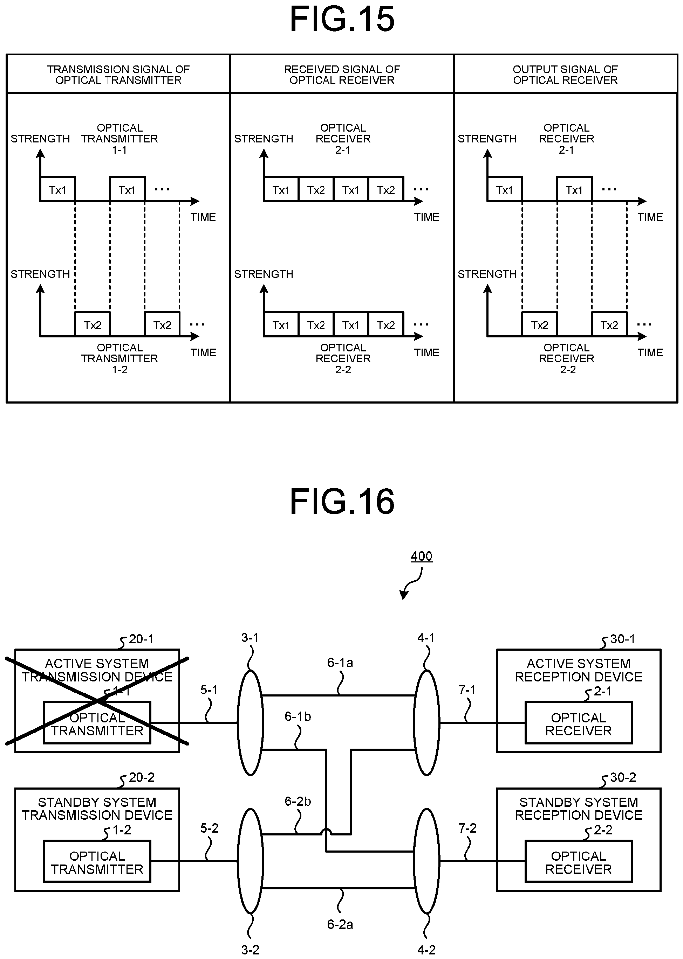

FIG. 15 is a diagram illustrating the transmission signals of the optical transmitters 1-1 and 1-2 and the received signals and the output signals of the optical receivers 2-1 and 2-2 when the optical communication system 400 illustrated in FIG. 14 is operated normally.

The optical transmitters 1-1 and 1-2 alternately transmit the optical signals Tx1 and Tx2. The optical receivers 2-1 and 2-2 receive the optical signals Tx1 and Tx2 in a time division manner. The received signals of the optical receivers 2-1 and 2-2 alternately include the optical signals Tx1 and Tx2. Each of the optical receivers 2-1 and 2-2 selects the output signal from the optical signals Tx1 and Tx2 included in the received signal.

Various configurations are conceivable for the optical receivers 2-1 and 2-2 to select the output signal from the optical signals Tx1 and Tx2 included in the received signal. As one example of such a configuration, as with the optical communication system 100 illustrated in FIG. 3, the optical communication system 400 includes the clock signal generating unit 9, the optical transmitters 1-1 and 1-2 include the signal generating units 10-1 and 10-2, respectively, and the optical receivers 2-1 and 2-2 include the signal loss detection units 11-1 and 11-2 and the signal selection units 12-1 and 12-2, respectively. The clock signal generating unit 9 can output a reference clock signal to each of the optical transmitters 1-1 and 1-2 and the optical receivers 2-1 and 2-2.

In this case, the signal loss detection unit 11-1 outputs the alarm signal when there is a signal loss in the received signal of the optical receiver 2-1, and does not output the alarm signal when there is no signal loss. The signal loss detection unit 11-2 outputs the alarm signal when there is a signal loss in the received signal of the optical receiver 2-2, and does not output the alarm signal when there is no signal loss. In the example illustrated in FIG. 15, no failure has occurred in the optical communication system 400, so that the signal loss detection units 11-1 and 11-2 do not output the alarm signal. Moreover, the signal selection units 12-1 and 12-2 each select the output signal on the basis of the presence or absence of the alarm signal and the priority of the optical communication paths connected to a corresponding one of the optical receivers 2-1 and 2-2. Each of the signal selection units 12-1 and 12-2 can also select the output signal on the basis of the reference clock signal. Specifically, each of the signal selection units 12-1 and 12-2 can determine a section including the output signal in the received signal on the basis of the reference clock signal. Since the alarm signal is not received, the signal selection unit 12-1 sets the optical signal Tx1 received via the optical communication path with high priority as the output signal, and the signal selection unit 12-2 sets the optical signal Tx2 received via the optical communication path with high priority as the output signal.

FIG. 16 is a diagram illustrating a first example of a state in which a failure has occurred in the optical communication system 400 illustrated in FIG. 14. In the first example illustrated in FIG. 16, the failure has occurred in the active system transmission device 20-1 of the optical communication system 400.

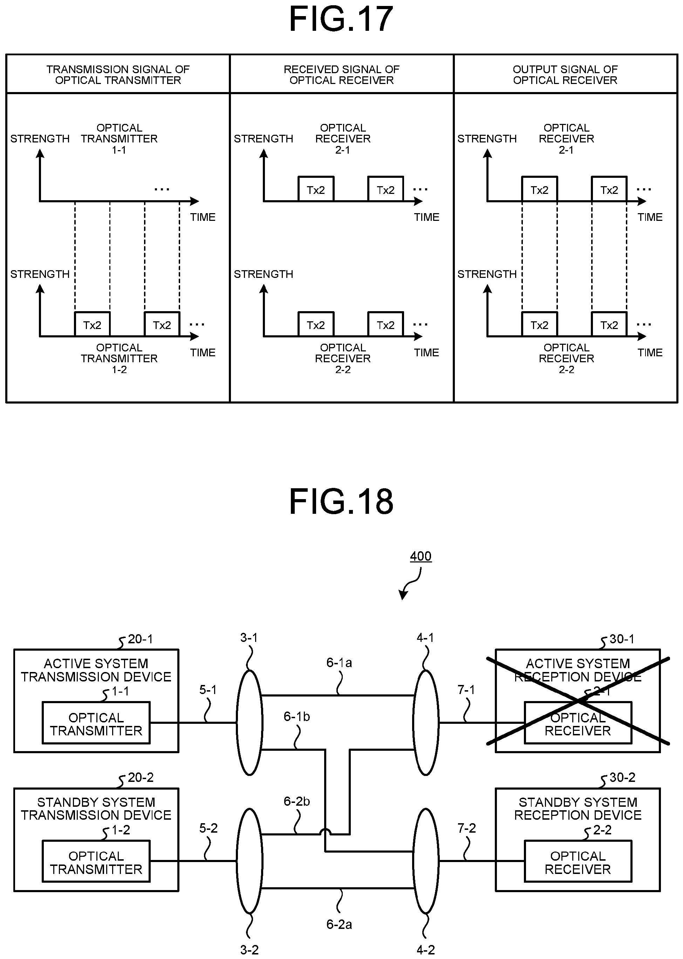

FIG. 17 is a diagram illustrating the transmission signals of the optical transmitters 1-1 and 1-2 and the received signals and the output signals of the optical receivers 2-1 and 2-2 in the optical communication system 400 in the state illustrated in FIG. 16. Since the failure has occurred in the active system transmission device 20-1 including the optical transmitter 1-1, the optical transmitter 1-1 cannot transmit the optical signal Tx1. The optical transmitter 1-2 intermittently transmits the optical signal Tx2. In this case, each of the optical receivers 2-1 and 2-2 cannot receive the optical signal Tx1 and intermittently receives the optical signal Tx2. Since the received signal does not include the optical signal Tx1 but includes the optical signal Tx2, each of the signal selection units 12-1 and 12-2 sets the optical signal Tx2 as the output signal.

FIG. 18 is a diagram illustrating a second example of a state in which a failure has occurred in the optical communication system 400 illustrated in FIG. 14. In the second example illustrated in FIG. 18, the failure has occurred in the active system reception device 30-1 of the optical communication system 400.

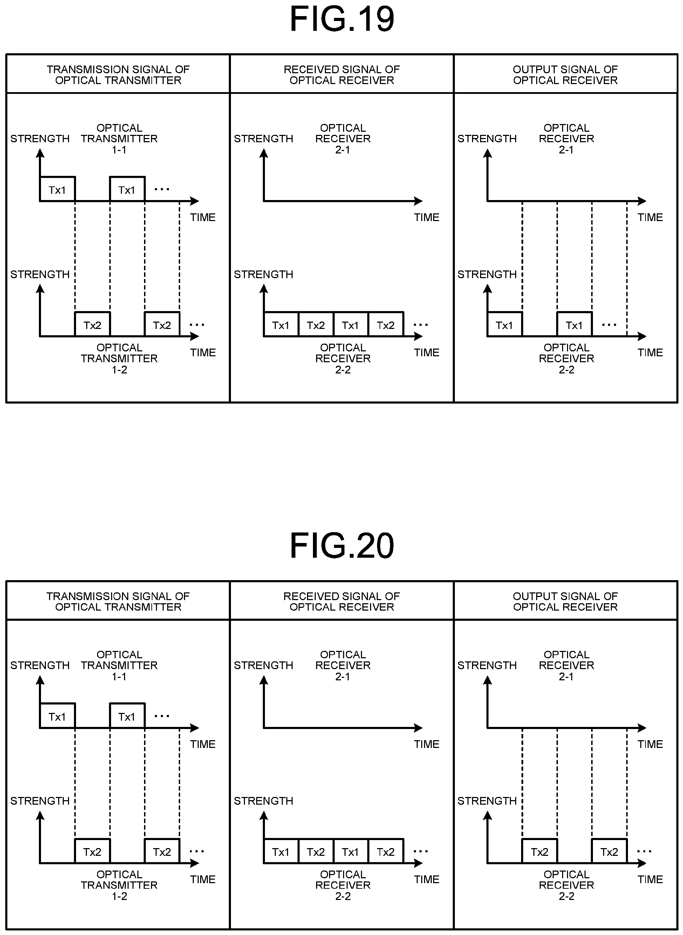

FIG. 19 is a diagram illustrating a first example of the transmission signals of the optical transmitters 1-1 and 1-2 and the received signals and the output signals of the optical receivers 2-1 and 2-2 in the optical communication system 400 in the state illustrated in FIG. 18. The operation performed from the optical transmitters 1-1 and 1-2 to the optical fibers 7-1 and 7-2 is similar to that when the optical communication system 400 is operated normally. Since the failure has occurred in the active system reception device 30-1 including the optical receiver 2-1, the optical receiver 201 cannot receive the optical signals Tx1 and Tx2. The optical receiver 2-2 receives the optical signals Tx1 and Tx2 in a time division manner. In this case, the signal selection unit 12-2 of the optical receiver 2-2 selects one of the optical signals Tx1 and Tx2 as the output signal. The signal selection unit 12-2 can perform an operation at the time of a failure on the basis of the alarm signal from the signal loss detection unit 11-1, and set the optical signal Tx1 as the output signal.

FIG. 20 is a diagram illustrating a second example of the transmission signals of the optical transmitters 1-1 and 1-2 and the received signals and the output signals of the optical receivers 2-1 and 2-2 in the optical communication system 400 in the state illustrated in FIG. 18. In the first example illustrated in FIG. 19, the signal selection unit 12-2 selects the optical signal Tx1 as the output signal, whereas in the second example illustrated in FIG. 20, the signal selection unit 12-2 can select the optical signal Tx2 as the output signal on the basis of the priority of the optical communication path.

In a case where the optical receiver 2-1 can output neither of the optical signals Tx1 and Tx2, the optical receiver 2-2 that can receive both of the optical signals Tx1 and Tx2 may set either of the optical signals Tx1 and Tx2 as the output signal. As illustrated in FIGS. 5, 9, and 13, in the case where the optical receiver 2-1 in which the signal loss has been detected can receive the optical signal Tx2 that is one of the optical signals, it is desirable that the optical receiver 2-2 output the optical signal Tx1 different from the optical signal output by the optical receiver 2-1.

As described above, the optical communication system 400 according to the fourth embodiment of the present invention includes the plurality of optical transmitters 1-1 and 1-2, the plurality of first optical couplers 3-1 and 3-2 provided respectively corresponding to the plurality of optical transmitters 1-1 and 1-2, the plurality of optical receivers 2-1 and 2-2, and the plurality of second optical couplers 4-1 and 4-2 provided respectively corresponding to the plurality of optical receivers 2-1 and 2-2. The plurality of first optical couplers 3-1 and 3-2 each split the optical signal transmitted by a corresponding one of the optical transmitters 1-1 and 1-2, and output the optical signal to each of the plurality of second optical couplers 4-1 and 4-2. The plurality of second optical couplers 4-1 and 4-2 each merge the plurality of optical signals Tx1 and Tx2 output from the plurality of first optical couplers 3-1 and 3-2, and output the merged signal to a corresponding one of the optical receivers 2-1 and 2-2. The plurality of optical transmitters 1-1 and 1-2 alternately transmit the optical signals.

In the optical communication system 400, the optical transmitters 1-1 and 1-2 alternately transmit the optical signals, and each of the optical receivers 2-1 and 2-2 receives the optical signal Tx1 transmitted by the optical transmitter 1-1 and the optical signal Tx2 transmitted by the optical transmitter 1-2 in a time division manner. Therefore, for example, even when a failure occurs in the active system transmission device 20-1 or the active system reception device 30-1, the redundancy can be implemented without causing communication interruption. At this time, the optical communication system 400 does not use a switch for the redundancy, thereby being able to implement the redundancy while reducing a failure rate.

Note that in the first and fourth embodiments above, the signal loss detection unit 11-1 and the signal selection unit 12-1 are provided in the optical receiver 2-1, and the signal loss detection unit 11-2 and the signal selection unit 12-2 are provided in the optical receiver 2-2, but the present embodiment is not limited to such an example. The signal loss detection unit 11-1 and the signal selection unit 12-1 may be provided outside the optical receiver 2-1, and the signal loss detection unit 11-2 and the signal selection unit 12-2 may be provided outside the optical receiver 2-2. In this case, the optical receiver 2-1 outputs the received signal to the signal loss detection unit 11-1, and the optical receiver 2-2 outputs the received signal to the signal loss detection unit 11-2. The similar applies to the second and third embodiments.

The configuration illustrated in the aforementioned embodiment merely illustrates an example of the content of the present invention, and can thus be combined with another known technique or partially omitted and/or modified without departing from the scope of the present invention.

Reference Signs List

1-1 to 1-2N optical transmitter; 2-1 to 2-2N optical receiver; 3-1 to 3-2N first optical coupler; 4-1 to 4-2N second optical coupler; 5-1 to 5-2N, 6-1a to 6-2Na, 6-1b to 6-2Nb, 7-1 to 7-2N optical fiber; 9 clock signal generating unit; 10-1 to 10-2N signal generating unit; 11-1 to 11-2N signal loss detection unit; 12-1 to 12-2N signal selection unit; 20-1 active system transmission device; 20-2 standby system transmission device; 30-1 active system reception device; 30-2 standby system reception device; 100, 200, 300, 400 optical communication system; Tx1 to Tx2N optical signal.

**Claims**

1. An optical communication system comprising:

   a plurality of optical transmitters;
   a plurality of first optical couplers provided respectively corresponding to the plurality of optical transmitters;
   a plurality of optical receivers; and
   a plurality of second optical couplers provided respectively corresponding to the plurality of optical receivers, wherein
   each of the plurality of first optical couplers splits an optical signal transmitted by a corresponding optical transmitter and outputs the optical signal to each of the plurality of second optical couplers,
   each of the plurality of second optical couplers merges a plurality of optical signals output from the plurality of first optical couplers and outputs a merged optical signal to the corresponding optical receiver, and
   the plurality of optical transmitters alternately transmit an optical signal.

2. The optical communication system according to claim 1, wherein

   priorities are determined among the plurality of optical transmitters connected to one of the optical receivers, and
   each of the plurality of optical receivers selects one of the optical transmitters on the basis of the priorities when receiving a plurality of optical signals from the plurality of optical transmitters, and sets, as an output signal, an optical signal received from the optical transmitter selected.

3. The optical communication system according to claim 1 or 2, wherein

   the plurality of optical transmitters are classified as a first group or a second group, and
   the optical transmitters in the first group and the optical transmitters in the second group alternately transmit an optical signal.

4. The optical communication system according to any one of claims 1 to 3, further comprising:

   a clock signal generating unit to generate a reference clock signal;
   a signal generating unit provided corresponding to each of the plurality of optical transmitters to generate an optical signal to be transmitted by a corresponding optical transmitter, and determine a timing to transmit the optical signal generated on the basis of the reference clock signal; and
   a signal selection unit provided corresponding to each of the plurality of optical receivers to select an output signal from among a plurality of optical signals included in a received signal of a corresponding optical receiver on the basis of the reference clock signal.

5. The optical communication system according to claim 4, further comprising

   a signal loss detection unit provided corresponding to each of the plurality of optical receivers to detect a loss of the received signal of a corresponding optical receiver, wherein
   the signal selection unit selects the output signal on the basis of whether or not the loss of the received signal of the corresponding optical receiver is detected and the reference clock signal.

6. The optical communication system according to claim 5, wherein

   priorities are determined among a plurality of optical communication paths connected to one of the optical receivers, and
   the signal selection unit selects the output signal from among a plurality of optical signals included in the received signal on the basis of whether or not the loss of the received signal is detected and the priorities, and determines a section including the output signal selected in the received signal on the basis of the reference clock signal.

7. The optical communication system according to any one of claims 4 to 6, wherein the signal generating unit sets a transmission interval of the optical signal to be shorter than a period of the optical signal.

8. An optical communication method comprising:

   in an optical communication system comprising a plurality of optical transmitters, a plurality of first optical couplers provided respectively corresponding to the plurality of optical transmitters, a plurality of optical receivers, and a plurality of second optical couplers provided respectively corresponding to the plurality of optical receivers,
   demultiplexing an optical signal transmitted by a corresponding optical transmitter and outputting the optical signal to each of the plurality of second optical couplers, performed by each of the plurality of first optical couplers; and multiplexing a plurality of optical signals output from the plurality of first optical couplers and outputting the multiplexed optical signal to the corresponding optical receiver, performed by each of the plurality of second optical couplers, wherein

the plurality of optical transmitters transmit the optical signals in a time division manner.

# FIG.1

# FIG.2

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.3

# FIG.4

# FIG.5

| TRANSMISSION SIGNAL OF OPTICAL TRANSMITTER | RECEIVED SIGNAL OF OPTICAL RECEIVER | OUTPUT SIGNAL OF OPTICAL RECEIVER |
| --- | --- | --- |

# FIG.6

200

# FIG.7

EP 4 044 457 A1

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

STRENGTH — OPTICAL TRANSMITTER 1-1 — Tx1 | Tx1 ··· TIME

STRENGTH — OPTICAL TRANSMITTER 1-2 — Tx2 | Tx2 ··· TIME

STRENGTH — OPTICAL TRANSMITTER 1-3 — Tx3 | Tx3 ··· TIME

STRENGTH — OPTICAL TRANSMITTER 1-(2N-2) — Tx(2N-2) | Tx(2N-2) ··· TIME

STRENGTH — OPTICAL TRANSMITTER 1-(2N-1) — Tx(2N-1) | Tx(2N-1) ··· TIME

STRENGTH — OPTICAL TRANSMITTER 1-2N — Tx2N | Tx2N ··· TIME

STRENGTH — OPTICAL RECEIVER 2-1 — Tx1 | Tx2N | Tx1 | Tx2N ··· TIME

STRENGTH — OPTICAL RECEIVER 2-2 — Tx1 | Tx2 | Tx1 | Tx2 ··· TIME

STRENGTH — OPTICAL RECEIVER 2-3 — Tx3 | Tx2 | Tx3 | Tx2 ··· TIME

STRENGTH — OPTICAL RECEIVER 2-(2N-2) — Tx(2N-3) | Tx(2N-2) | Tx(2N-3) | Tx(2N-2) ··· TIME

STRENGTH — OPTICAL RECEIVER 2-(2N-1) — Tx(2N-1) | Tx(2N-2) | Tx(2N-1) | Tx(2N-2) ··· TIME

STRENGTH — OPTICAL RECEIVER 2-2N — Tx(2N-1) | Tx2N | Tx(2N-1) | Tx2N ··· TIME

STRENGTH — OPTICAL RECEIVER 2-1 — Tx1 | Tx1 ··· TIME

STRENGTH — OPTICAL RECEIVER 2-2 — Tx2 | Tx2 ··· TIME

STRENGTH — OPTICAL RECEIVER 2-3 — Tx3 | Tx3 ··· TIME

STRENGTH — OPTICAL RECEIVER 2-(2N-2) — Tx(2N-2) | Tx(2N-2) ··· TIME

STRENGTH — OPTICAL RECEIVER 2-(2N-1) — Tx(2N-1) | Tx(2N-1) ··· TIME

STRENGTH — OPTICAL RECEIVER 2-2N — Tx2N | Tx2N ··· TIME

19

# FIG.8

# FIG.9

# FIG.10

# FIG.11

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.12

300

OPTICAL TRANS-MITTER 1-1  5-1  3-1  6-1a  ×  4-1  7-1  OPTICAL RECEIVER 2-1

6-1b

OPTICAL TRANS-MITTER 1-2  5-2  3-2  6-2a  4-2  7-2  OPTICAL RECEIVER 2-2

6-2b

OPTICAL TRANS-MITTER 1-3  5-3  3-3  6-3a  4-3  7-3  OPTICAL RECEIVER 2-3

6-3b

OPTICAL TRANS-MITTER 1-4  5-4  3-4  6-4a  4-4  7-4  OPTICAL RECEIVER 2-4

6-4b

# FIG.13

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.14

# FIG.15

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.16

# FIG.17

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.18

# FIG.19

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

# FIG.20

| TRANSMISSION SIGNAL OF OPTICAL TRANSMITTER | RECEIVED SIGNAL OF OPTICAL RECEIVER | OUTPUT SIGNAL OF OPTICAL RECEIVER |
|---|---|---|

**EP 4 044 457 A1**

**INTERNATIONAL SEARCH REPORT**

| | International application No. |
|---|---|
| | PCT/JP2019/045077 |

A. CLASSIFICATION OF SUBJECT MATTER
Int. Cl. H04B10/03(2013.01)i, H04B10/27(2013.01)n
FI: H04B10/03, H04B10/27

According to International Patent Classification (IPC) or to both national classification and IPC

B. FIELDS SEARCHED

Minimum documentation searched (classification system followed by classification symbols)
Int. Cl. H04B10/03, H04B10/27

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-339344 A (HITACHI LTD., HITACHI COMMUNICATION SYSTEM KK) 07 December 2001, entire text, all drawings | 1-8 |
| A | JP 2001-257702 A (FUJI XEROX CO., LTD.) 21 September 2001, entire text, all drawings | 1-8 |
| A | JP 2008-311877 A (BROAD NET MUX CORP.) 25 December 2008, entire text, all drawings | 1-8 |
| A | JP 2009-194840 A (FUJITSU LTD.) 27 August 2009, entire text, all drawings | 1-8 |
| A | JP 10-209964 A (FUJITSU LTD.) 07 August 1998, entire text, all drawings | 1-8 |

☐ Further documents are listed in the continuation of Box C.　　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.01.2020 | 21.01.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

30

**INTERNATIONAL SEARCH REPORT**
Information on patent family members

International application No.

PCT/JP2019/045077

| Patent Documents referred to in the Report | Publication Date | Patent Family | Publication Date |
|---|---|---|---|
| JP 2001-339344 A | 07.12.2001 | US 2001/0046344 A1 entire text, all drawings | |
| JP 2001-257702 A | 21.09.2001 | (Family: none) | |
| JP 2008-311877 A | 25.12.2008 | (Family: none) | |
| JP 2009-194840 A | 27.08.2009 | (Family: none) | |
| JP 10-209964 A | 07.08.1998 | US 5949563 A entire text, all drawings EP 855814 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10209964 A